(19) Europäisches Patentamt

European Patent Office

Office européen des brevets

(11) **EP 1 077 850 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.7: **B60T 8/00**

(21) Anmeldenummer: **99924936.0**

(86) Internationale Anmeldenummer:
**PCT/EP99/03224**

(22) Anmeldetag: **11.05.1999**

(87) Internationale Veröffentlichungsnummer:
**WO 99/058382 (18.11.1999 Gazette 1999/46)**

(54) **FAHRZEUGSTABILISIERENDE EINRICHTUNG UND VERFAHREN ZUM MODIFIZIEREN VON BREMSDRÜCKEN**

VEHICLE STABILIZING DEVICE AND METHOD FOR MODIFYING BRAKE PRESSURES

DISPOSITIF DE STABILISATION DE VEHICULE ET PROCEDE POUR LA MODIFICATION DES PRESSIONS DE FREINAGE

(84) Benannte Vertragsstaaten:
**DE ES FR GB IT**

(30) Priorität: **12.05.1998 DE 19821179**

(43) Veröffentlichungstag der Anmeldung:
**28.02.2001 Patentblatt 2001/09**

(73) Patentinhaber:
• **Continental Teves AG & Co. oHG**
**60488 Frankfurt am Main (DE)**
• **DaimlerChrysler AG**
**70567 Stuttgart (DE)**

(72) Erfinder:
• **BAUMANN, Mathias**
**D-71083 Herrenberg (DE)**
• **HERRMANN, Torsten**
**D-60487 Frankfurt am Main (DE)**
• **HAUSSMANN, Marc**
**D-65934 Frankfurt (DE)**

(56) Entgegenhaltungen:
**EP-A- 0 771 707        DE-A- 3 840 456**
**DE-A- 19 524 939**

**Beschreibung**

Die Erfindung betrifft eine fahrzeugstabilisierende Einrichtung und ein Verfahren nach dem Oberbegriff des Anspruchs 1 bzw. 13.

1. Stand der Technik

Die prinzipielle ESP (Elektronisches Stabilitäts Programm) - Strategie zur Stabilisierung eines Fahrzeugs besteht im ungebremsten Fall in der gezielten Abbremsung einzelner Räder durch aktiven Druckaufbau im entsprechenden Radbremszylinder. Hierdurch wird durch Seitenkraftabbau und gleichzeitigen Längsoder Bremskraftaufbau ein stabilisierendes Drehmoment (Giermoment) in die Fahrzeugstruktur eingeprägt. Im Gegensatz zum ungebremsten Fall muß bei gleichzeitiger Fahrerbremsung zur Einleitung eines stabilisierenden Giermoments von einer vorhandenen Vordruck- und damit auch Kraftverteilung an den Rädern ausgegangen werden, die sich durch den Fahrervordruck oder ggf. durch das vom ABS (Antiblockier-System) eingesteuerte Druckniveau in den Radbremszylindern einstellt.

Aus der DE 38 40 456 A1 ist eine fahrzeugstabilisierendes Verfahren und aus der EP-A-0 771 707 eine fahrzeugstabilisierende Einrichtung bekannt. Das in der DE 38 40 456 A1 beschriebene Verfahren modifiziert die Bremsdrücke an den Rädern nach dem Ist und Soll Bremschlupf und den Schräglaufwinkeln während die E P-A-0 771 707 die Pedalbetätigungsgeschwindigkeit zur Erkennung einer panischen Bremsreaktion als Parameter heranzieht.

2. Beschreibung

Der Erfindung liegt die Aufgabe zugrunde, eine Bremsstrategie anzugeben, mit der ein Fahrzeug im aktiv gebremsten Fall mit Druckaufbau so stabilisiert werden kann, daß sich ein Optimum aus dem Bremswunsch des Fahrers, der Fahrzeugstabilisierung bzw. Lenkfähigkeit des Fahrzeugs und dem Pedal- und Geräuschkomfort einstellt..

Diese Aufgabe wird bei einer gattungsgemäßen Einrichtung durch die Merkmale des Anspruchs 1 und bei einem gattungsgemäßen Verfahren durch die Merkmale des Anspruchs 13 gelöst.

Dadurch, daß eine fahrzeugstabilisierende Einrichtung zum Modifizieren von Bremsdrücken an Rädern bei einem Fahrzeug nach Eingangsdaten vorgesehen ist, die eine Veränderung der Bremsdrücke an mindestens einem Rad nach einer vom Fahrerbremsdruck bestimmten Beeinflussung einer mehrere Beeinflussungszyklen bzw. Beeinflussungsstrategien zur Verfügung stellenden Eingriffseinheit durchführt, wird solange wie möglich mit Hilfe des vorhandenen Fahrervordrucks ohne aktiven Druckaufbau über dieses Druckniveau eine Stabilisierung des Fahrzeugs bei möglichst optimaler Abbremsung erreicht.

Der große Vorteil der Druckmodulationen unterhalb des Fahrervordrucks besteht darin, daß diese sehr komfortabel für den Fahrer ausgeführt werden können. So bleiben die bei einer fahrzeugstabilisierenden Einrichtung (z. B. nach DE 19816290) verwendeten Trennventile(ASR 1/2) in diesem Zustandsbereich geöffnet und die Umschaltventile (SV 1/2) geschlossen, so daß für den Fahrer keinerlei komfortmindernde Pedalrückwirkungen oder ggf. Geräuschentwicklungen infolge des Eingriffs entstehen.

Darüber hinaus ist die Druckaufbauanforderung in dem zweiten Beeinflussungszyklus gleich dem Fahrervordruck, so daß neben dem Trenn- und Umschaltventil auch das Einlaßventil des entsprechenden Rades durchgängig geöffnet bleibt, wodurch eine weitere Verbesserung des Pedalkomforts entsteht.

Die Erfindung betrifft auch ein fahrzeugstabilisierendes Verfahren zum Modifizieren von Bremsdrücken an Rädern bei einem Fahrzeug nach Eingangsdaten, bei dem die Bremsdrücke an mindestens einem Rad nach einer vom Fahrerbremsdruck bestimmten Beeinflussung, welche aus mehreren Beeinflussungszyklen bzw. Beeinflussungsstrategien ausgewählt wird, verändert werden.

Vorteilhafte Ausführungen der Erfindung sind in den Unteransprüchen angegeben.

Durch die Erfindung werden die Wirksamkeit des Eingriffs und der Komfort nachhaltig gegenüber dem bisherigen Eingriff verbessert. Im Detail werden durch den Druckabbau auf dem kurvenäußeren Vorderrad im Untersteuerfall Seitenführungskräfte aufgebaut, die die Lenkfähigkeit des Fahrzeugs und seine Stabilisierung entscheidend verbessern. Durch den gleichzeitigen Druckaufbau auf dem kurveninneren Hinterrad wird die verminderte Abbremsung durch den Druckaufbau am Vorderrad eingegrenzt. Die Vermeidung des Druckaufbaus über den Fahrervordruck hinaus und damit die Umgehung der Bestromung von Trenn- und Umschaltventil, insbesondere bei kleinen bis mittleren Fahrzeuginstabilitäten, erhöht den Komfort während des Eingriffs.

Dabei steht die Komfortverbesserung bei ESP-Eingriffen mit mittlerer und kleiner Fahrzeuginstabilität durch Vermeidung eines Druckaufbaus über den Fahrervordruck eindeutig im Vordergrund.

Ein Ausführungsbeispiel der Erfindung ist in der Zeichnung dargestellt und wird im folgenden näher beschrieben.

Es zeigen:

Fig. 1    ein Schema der Grundelemente der Druckanforderung aus der Reglergröße MG

Fig. 2    das ESP-Regelkonzept nach der Erfindung

Fig. 3    ein Flußdiagramm der Beeinflussungszyklen für den ESP-Eingriff im aktiv gebremsten Fall mit Druckabbau nach der Erfindung

Fig. 4    ein Flußdiagramm der Beeinflussungszyklen zwei und drei für den ESP-Eingriff im aktiv gebremsten Fall mit Druckabbau nach der Erfindung.

2.0 Eingriffsstrategie

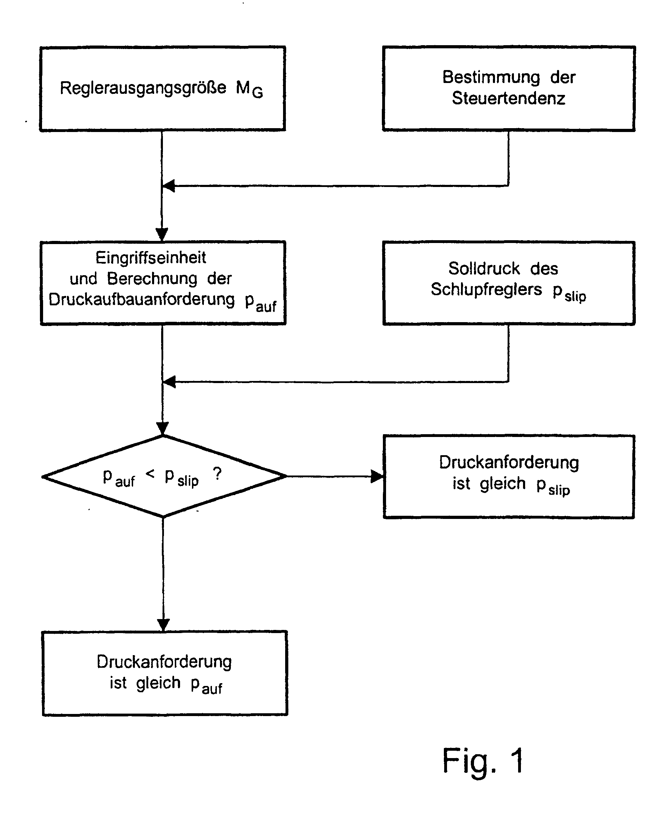

Zur besseren Erläuterung des ESP-Eingriffs im aktiv gebremsten Fall mit Druckabbau wird der Zustand ohne Druckabbau erläutert. Einen Überblick der wesentlichen Berechnungsschritte ausgehend von der Reglerausgangsgröße $M_G$ (Drehmoment bzw. Giermoment) bis zur Bestimmung der Druckanforderung $P_{auf}$ ist in Figur 1 dargestellt, die in den folgenden Abschnitten beschrieben wird.

2.1 Berechnung der Reglerausgangsgröße $M_G$

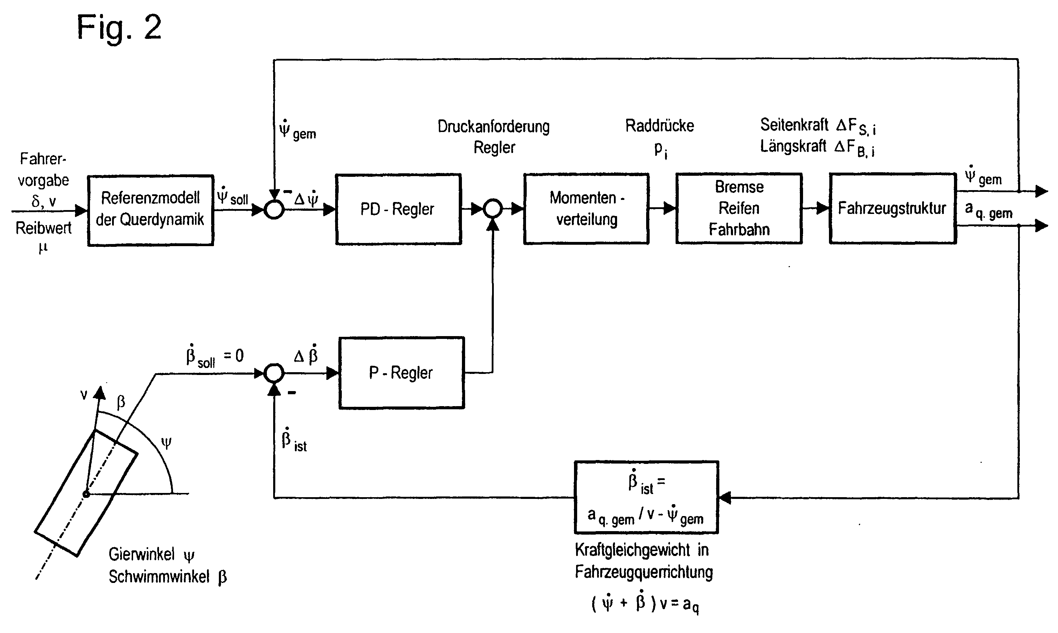

Die Grundelemente des ESP-Regelkreises sind Figur 2 entnehmbar. Die gesamte Reglerausgangsgröße $M_G$ des PD-Reglers (Gierrate $\psi$) und P-Reglers (Schwimmwinkelgeschwindigkeit $\beta$) bestimmt sich in der folgenden Weise :

$$M_G = K_{\dot{\psi}}\, sign\left(\Delta\dot{\psi}\right)\left(\left|\Delta\dot{\psi}\right| - \Delta\dot{\psi}_{Out}\right) + K_{\ddot{\psi}}\, sign\left(\Delta\ddot{\psi}\right)\left(\left|\Delta\ddot{\psi}\right| - \Delta\ddot{\psi}_{Out}\right) + K_{\dot{\beta}}\, sign\left(\dot{\beta}_{Fhz}\right)\left(\left|\dot{\beta}_{Fhz}\right| - \dot{\beta}_{Out}\right)$$

mit

$$\Delta\dot{\psi} = \dot{\psi}_{Fhz} - \dot{\psi}_{Soll} \qquad \Delta\ddot{\psi} = \ddot{\psi}_{Fhz} - \ddot{\psi}_{Soll} \qquad\qquad (1)$$

Der Index Fhz kennzeichnet die Istwerte der Gierrate $\dot{\psi}$, Gierbeschleunigung $\ddot{\psi}$ und Schwimmwinkelgeschwindigkeit $\dot{\beta}$ des Fahrzeugs. Die entsprechenden Sollwerte sind mit dem Index Soll bezeichnet. Die sich aus der Differenz der Ist- und Sollwerte ergebenden Regelabweichungen der Gierrate und Gierbeschleunigung sind $\Delta\dot{\psi}$ und $\Delta\ddot{\psi}$. Die Austrittsregelschwellen sind am Index Out erkennbar. Die Verstärkungsfaktoren des PD-Reglers ($K_{\dot{\psi}}$ und $K_{\ddot{\psi}}$) sind abhängig vom Reibwert der Paarung Reifen/Straße (linearer Ansatz) und der Verstärkungsfaktor des P- Reglers ($K_{\dot{\beta}}$) vom Grad der Stationarität der Fahrzeugbewegung.

2.2 Eingriffseinheit und Berechnung der Druckaufbauanforderung

Die Reglerausgangsgröße $M_G$ wächst proportional zur Fahrzeuginstabilität und damit auch zum erforderlichen Giermoment, das zur gewünschten Fahrzeugstabilisierung notwendig ist. Dieses Giermoment wird durch einseitigen Druckaufbau in den Aktuatoren (Radbremsen) in die Fahrzeugstruktur eingeprägt. Im Detail bewirken die eingeprägten Bremsmomente an den Rädern einen Bremskraftaufbau in Fahrzeuglängsrichtung und einen Seitenkraftabbau in Querrichtung, die bei geeigneter Auswahl der Eingriffsräder das gewünschte Giermoment erzeugen. Somit ist für eine bestimmte Steuertendenz des Fahrzeugs (Unter- oder Übersteuern) zunächst diese Festlegung der Eingriffsräder zu treffen. Bei untersteuerndem Fahrzeug wird für den Druckaufbau das kurveninnere Hinterrad und bei übersteuerndem Fahrverhalten das kurvenäußere Vorderrad ausgewählt.

Die Größe der notwendigen Druckerhöhung $\Delta p_{auf}$ bestimmt sich für die Vorderachse aus dem Zusammenhang

$$\Delta p_{auf,v} = |M_G|, \qquad\qquad 2)$$

d.h. die Reglerausgangsgröße $M_G$ (s.Gl.(1)) ist physikalisch - abgesehen vom Vorzeichen - bereits ein Druck. Für die Hinterachse lautet die Bestimmungsgleichung :

$$\Delta P_{auf,h} = K_{Br} \, |M_G|, \qquad\qquad 3)$$

Die Gradient der Umsetzung eines Bremszylinderdrucks in eine Bremskraft ist für die Vorder- und Hinterachse nicht gleich. Diesen Umstand erfaßt der Faktor $K_{Br}$, der in der folgenden Weise berechnet wird :

$$K_{Br} = \frac{A_{K,v}}{A_{K,h}} \frac{r_{w,v}}{r_{w,h}} \frac{C_v^*}{C_h^*} \qquad\qquad (4)$$

Dabei sind :

$A_K$ - Bremskolbenfläche
$r_w$ - wirksamer Bremsenhalbmesser
$C^*$ - Bremsenkonstante

In Gleichung (4) wurde angenommen, daß sowohl der Reibwert der Paarung Bremsbelag / Bremsfläche, als auch die Reifenradien der Vorder- und Hinterachse gleich sind. Die in Gleichung (2) bzw. (3) berechnete Druckerhöhung ist im ungebremsten Fall, d.h. für den Vordruck null, gleich der absolut vorzugebenden Druckanforderung $p_{auf}$. Für den gebremsten Fall hingegen ist bereits in allen Radbremsen ein Vordruck vorhanden, der für die Druckerhöhung des ESP berücksichtigt werden muß. Daher bestimmt sich die Druckanforderung in der folgenden Weise :

$$P_{auf} = P_{ref} + \Delta P_{auf} \qquad\qquad (5)$$

Der Druck $P_{ref}$ ist ein Referenzdruck von dem ausgehend die Druckerhöhung vorgenommen wird.Dieser Druck ist gleich dem Istdruck des im Druckaufbau befindlichen Rades bei Regelungseintritt (Wert wird abgespeichert), wobei eine Kompensation von äußeren Einflußgrößen während des Regelungsablaufs wirksam ist. Erfaßt werden hier Drucksteigerungen auf dem gegenüberliegenden Rad der gleichen Achse, die z.B. durch Erhöhung des Fahrervordrucks oder Steigerung des ABS-Regelniveaus (infolge Reibwertsprung o.ä.) verursacht wurden.Der ungebremste Fall ist in Gl.(5) für $P_{ref} = 0$ enthalten.

2.3 Begrenzung der Druckanforderung durch den Schlupfregler

Wird die Druckanforderung $P_{auf}$ und der darausfolgende Druck im Radbremszylinder zunehmend gesteigert, dann erreicht das entsprechende Rad zunächst den Schlupfbereich des größten Reibbeiwerts in Fahrzeuglängsrichtung. Bis zu diesem Punkt wird zum einen Bremskraft in Längsrichtung aufgebaut und desweiteren Seitenführungskraft abgebaut. Eine weitere Drucksteigerung bewirkt darauffolgend keine wesentliche Erhöhung der Bremskraft mehr, jedoch wird die Seitenführungskraft weiter reduziert, d.h. auch in diesem Bereich ist eine weitere Erhöhung des Drucks sinnvoll und wird daher auch durchgeführt. Eine Grenze findet dieser Effekt jedoch bei großen Schlüpfen (größer 80 %), in dem nur noch eine geringe Seitenkraftabnahme festzustellen ist. Aus diesem Grunde und um ein komfortminderndes Blockieren des Rades zu verhindern, wird die Druckanforderung auf ein bestimmtes Niveau begrenzt.
Dieses Niveau wird von einem Schlupfregler festgelegt. Dieser berechnet unter Berücksichtigung des am Rad gemessenen Istschlupfs ständig im Hintergrund einen Solldruck $P_{slip}$ im Radzylinder, der zu einem Sollschlupf von 50 % führen würde (Figur 1). Wenn dieser Druck $p_{slip}$ kleiner ist, als die aus Gl.(5) bestimmte Druckanforderung $p_{auf}$, dann wird $P_{slip}$ die neue Druckanforderung $P_{auf}$. Bedingt durch die Regelgüte des Schlupfreglers stellt sich in diesem Betriebsbereich vorzugsweise ein Schlupfband von ca. 30 - 70 % ein.
Der in diesem Abschnitt beschriebene Schlupfregler kommt für den ungebremsten und gebremsten Fall zum Einsatz.

3. ESP - Eingriffsstrategie im aktiv gebremsten Fall mit Druckabbau

3.1 Eingriffseinheit

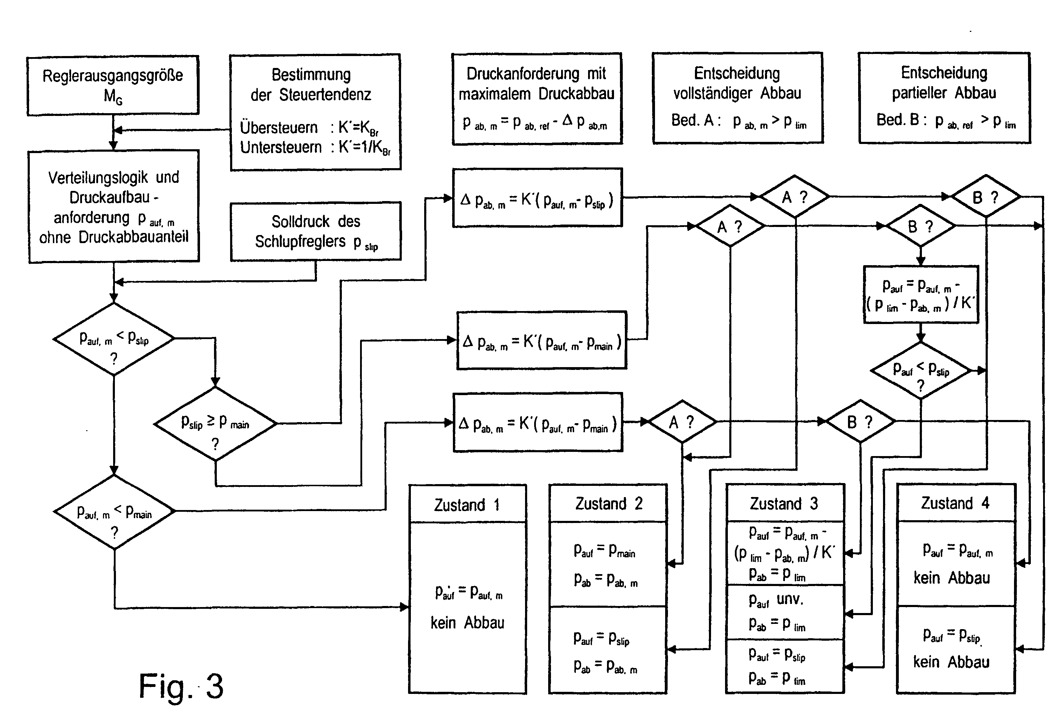

Das erste Element der Einrichtung bzw. des Verfahrens nach der Erfindung besteht in der geeigneten Auswahl der Eingriffsräder für den Druckauf- und Druckabbau für eine gegebene Steuertendenz des Fahrzeugs (Figur 3 zeigt die Elemente der Beeinflussungszyklen bzw. der Beeinflussungsstrategie in Form eines Flußdiagramms). Der Druckaufbau erfolgt wie im ESP-Eingriff ohne Druckabbau im Übersteuerfall am kurvenäußeren Vorderrad und im Untersteuerfall am kurveninneren Hinterrad. Für den Druckabbau wird das jeweils diagonal dazu liegende Rad verwendet, d.h. im Untersteuerfall das kurvenäußere Vorderrad und im Übersteuerfall das kurveninnere Hinterrad. Prinzipiell wird durch den Druckabbau die Seitenführungskraft des Rades erhöht und die Bremskraft verringert, so daß die hierdurch entstehenden Momentenanteile bei der genannten Auswahl ein stabilisierendes Gesamtmoment erzeugen. Eine Zusammenfassung der Auswahl der Eingriffsräder ist in der folgenden Tabelle gezeigt.

Tab.1 :

| Auswahl der Eingriffsräder für über- und untersteuerndes Fahrverhalten | | |
| --- | --- | --- |
| Steuertendenz | Eingriffsrad | Druckmodulation |
| übersteuernd | kurvenäuße res Vorderrad | Druckaufbau |
| | kurveninneres Hinterrad | Druckabbau |
| untersteuernd | kurveninneres Hinterrad | Druckaufbau |
| | kurvenäußeres Vorderrad | Druckabbau |

3.2 Berechnung der Druckanforderungen für den Druckauf- und Druckabbau

Sowohl die Druckaufbauanforderung $p_{auf}$, als auch die Druckabbauanforderung $p_{ab}$ müssen das vorhandene Vordruckniveau (Ist-Bremsdruck) berücksichtigen. Mit der Druckerhöhung im Aufbaufall $\Delta p_{auf}$ und der Druckerniedrigung $\Delta p_{ab}$ im Abbaufall lauten daher die Bestimmungsgleichungen der beiden Druckanforderungen:

$$p_{auf} = p_{auf,ref} + \Delta p_{auf} \qquad\qquad (6)$$

und

$$p_{ab} = p_{ab,ref} - \Delta p_{ab} \qquad\qquad (7)$$

Die Referenzdrücke $p_{auf,ref}$ und $p_{ab,ref}$ erfassen im Wesentlichen das genannte Vordruckniveau. Im Detail ist $p_{auf,ref}$ gleich dem Referenzdruck aus Gleichung (5). Der Referenzdruck $p_{ab,ref}$ ist gleich dem Istdruck des Abbaurades bei Regelungseintritt (ebenso Abspeicherung dieses Werts), wobei hier Druckveränderungen des gegenüberliegenden Rades der gleichen Achse innerhalb der Regelung berücksichtigt werden.

Die Druckanforderungen $P_{auf}$ und $P_{ab}$ nach Gl. (6) und (7) sind nach oben bzw. unten begrenzt. Die Druckanforderung $P_{auf}$ wird auf den Solldruck des Schlupfreglers $P_{slip}$ nach oben begrenzt, um wiederum ein Blockieren des Rades zu verhindern und gleichzeitig den maximalen Seitenkraftabbau ausnutzen zu können (vgl. hierzu auch Abschnitt 2.3). Hingegen wird die. Druckabbauanforderung $P_{ab}$ nach unten auf einen Grenzdruck $P_{lim}$ begrenzt, um dem zu starken Entbremsen des Rades entgegenzuwirken. Der untere Grenzdruck $P_{lim}$ wird abhängig von der Eingriffsachse auf einen konstanten Wert gesetzt:

Vorderachse: 15bar
Hinterachse: 5bar

Selbstverständlich ist es auch möglich, den Grenzdruck $P_{lim}$ variabel, z.B.abhängig vom Reibwert und/oder Fahrerbremsdruck zu bestimmen.
Wesentlich ist als nächster Schritt die Bestimmung der Druckerniedrigung $\Delta p_{ab}$ und der Druckerhöhung $\Delta p_{auf}$ aus der Reglerausgangsgröße $M_G$ (vgl. Gl. (1)). Da beide Anteile gleichzeitig wirksam werden können, muß die Reglerausgangsgröße $M_G$ in geeigneter Weise auf diese aufgeteilt werden :

$$M_G = M_{G,auf} + M_{G,ab} . \qquad\qquad (8)$$

Die Bestimmung von $\Delta p_{auf}$ aus $M_{G,auf}$ erfolgt nach Gl.(2) bzw. (3). Für den Anteil $\Delta p_{ab}$ gilt entsprechend für die Vorderachse (Untersteuerfall)

$$\Delta p_{ab,v} = |M_{G,ab}|, \tag{9}$$

und entsprechend für die Hinterachse (Übersteuerfall) :

$$\Delta p_{ab,h} = K_{Br}|M_{G,ab}| \tag{10}$$

Dem Grundgedanke der Aufteilungssrategie folgend wird in einem ersten Beeinflussungszyklus bzw. einer ersten Stufe (von insgesamt vier Zyklen bzw. Stufen) nur der Druckaufbauanteil $\Delta P_{auf}$ und damit die Druckaufbauanforderung $P_{auf}$ gem. Gl.(6) bis maximal zum Fahrervordruck gesteigert. In dieser Phase wird am diagonal liegenden Rad noch kein Druck abgebaut, so daß auch noch keine Entbremsung dieses Rades stattfindet.

Erreicht bei größerer Reglerausgangsgröße $M_G$ die daraus berechnete Druckanforderung $P_{auf}$ den Fahrervordruck $p_{main}$, dann wird in dem zweiten Beeinflussungszyklus bzw. der zweiten Stufe der Druckaufbau auf den Fahrervordruck begrenzt und zusätzlich auch der Druckabbau am diagonal liegenden Rad aktiviert. Im Detail wird aus dem verbleibenden Anteil der Reglerausgangsgröße $M_G$ der Druckabbauanteil $\Delta P_{ab}$ bestimmt. Aus Gl. (9) bzw. (10) kann unter Berücksichtigung von Gl. (8) nach Auswerten von Gl. (2) bzw. (3) und Gl.(6) für den Fahrervordruck $P_{main}$ die folgende Bestimmungsgleichung für die Druckabsenkung abgeleitet werden :

$$\Delta p_{ab,m} = K'\left(p_{auf,m} - p_{main}\right) \tag{11}$$

Für die Hinterachse (Übersteuereingriff) ist dabei

$$K' = K_{Br} \tag{12}$$

und für die Vorderachse (Untersteuereingriff)

$$K' = 1 / K_{Br} . \tag{13}$$

Die maximale Druckaufbauanforderung $p_{auf,m}$ in Gl.(11) ist der Wert, der sich ohne Druckabbau für die Vorderachse nach

$$p_{auf,m} = p_{auf,ref} + |M_G| \tag{14}$$

bzw. die Hinterachse nach

$$p_{auf,m} = p_{auf,ref} + K_{Br}|M_G| \tag{15}$$

ergeben würde, d.h. er wird mit der kompletten Reglerausgangsgröße $M_G$ berechnet. In dem zweiten Beeinflussungszyklus bzw. der zweiten Stufe bleibt die sich mit dem Druckabbauanteil nach Gl.(11) ergebende Druckanforderung $p_{ab}$ nach Gl.(7) jedoch noch größer als der untere Grenzdruck $p_{lim}$, so daß der Druckabbauanteil auch vollständig abgebaut werden kann. Da die Druckaufbauanforderung in dem zweiten Beeinflussungszyklus bzw. der zweiten Stufe gleich dem Fahrervordruck ist, kann neben dem Trennventil und Umschaltventil auch das Einlaßventil des entsprechenden Rades durchgängig geöffnet bleiben, wodurch eine weitere Verbesserung des Pedalkomforts entsteht. Der zweite Beeinflussungszyklus bzw. die zweite Stufe kann auch erreicht werden, wenn der Solidruck des Schlupfreglers $P_{slip}$ kleiner als der Fahrervordruck $p_{main}$ ist. Dann wird $p_{auf}$ bereits vor Erreichen von $p_{main}$ auf $p_{slip}$ begrenzt. Der Abbauanteil für das diagonal liegende Rad wird dann in analoger Weise nach der Beziehung

$$\Delta p_{ab,m} = K' \left( p_{auf,m} - p_{slip} \right) \qquad (16)$$

berechnet. In diesem Fall bleibt das Einlaßventil jedoch nicht unbestromt.

In dem dritten Beeinflussungszyklus bzw. der dritten Stufe ist die berechnete Abbauanforderung $P_{ab}$ nach Gl. (7) und (11) kleiner als der untere Grenzdruck $P_{lim}$, so daß diese auf den Wert von $P_{lim}$ begrenzt wird. Damit ist die Reglerausgangsgröße $M_G$ noch nicht vollständig durch die Druckerhöhung am Rad im Druckaufbau bis $P_{main}$ und die Druckerniedrigung am Rad im Druckabbau umgesetzt. In dieser Situation muß der Komfort zugunsten einer ausreichenden Fahrzeugstabilisierung zurückgestellt werden, d.h. der verbleibende durch den Druckabbau nicht absetzbare Anteil der Reglerausgangsgröße $M_G$ muß für die aktive Druckerhöhung über den Fahrervordruck $p_{main}$ verwendet werden. Damit werden sowohl die Trenn-, als auch die Umschaltventile des Kreises im Druckaufbau bestromt. Die Bestimmung der Druckanforderung des Rades im Druckaufbau $P_{auf}$ kann nach der Beziehung

$$p_{auf} = p_{auf,m} - \left( p_{lim} - p_{ab,m} \right) / K' \qquad (17)$$

mit K' nach Gl.(12) bzw. (13) erfolgen. Die Anforderung $P_{auf,m}$ wird aus Gl.(14) bzw. (15) und $P_{ab,m}$ aus Gl.(7) und (11) berechnet. Ist in der dritten Stufe der Druckaufbau bereits durch den Schlupfregler auf $p_{slip}$ vor Erreichen des Fahrervordrucks $p_{main}$ begrenzt worden, ist eine weitere Druckerhöhung nicht mehr möglich, d.h. die Wirksamkeit des Gesamteingriffs hat bereits ihre Grenze erreicht. In diesem Fall unterbleibt wiederum die Bestromung von Trenn- und Umschaltventil.

Der vierte Beeinflussungszyklus bzw. die vierte Stufe ist erreicht, wenn nicht einmal ein partieller Druckabbau möglich ist, also schon vor Regelungseintritt der Vordruck kleiner ist als der untere Grenzdruck $p_{lim}$. Als Vergleichswert für den Vordruck wird der Referenzdruck $p_{ab,ref}$ verwendet. In dieser Stufe wird somit die Druckanforderung am Rad im Druckaufbau über den Fahrervordruck $P_{main}$ nach Gl.(14) bzw. (15) erhöht, so daß sich die Druckmodulation nicht von dem ursprünglichen Fall ohne Druckabbau unterscheidet. Damit kann in dem vierten Beeinflussungszyklus bzw. der vierten Stufe ebenso der Schlupfregler den Druckaufbau auf $p_{slip}$ begrenzen.

Alle wesentlichen Elemente der Beeinfussungszyklen bzw. der Beeinflussungsstrategien und deren Abfolge sind zusammenfassend in Form eines Flußdiagramms in Figur 3 dargestellt. Nachdem die Reglerausgangsgröße und die Steuertendenz bekannt sind, können im Rahmen der Eingriffseinheit die Eingriffsräder festgelegt werden (vgl. auch Tab.1). Dann wird zunächst die Druckaufbauanforderung $P_{auf,m}$ (vgl. Gl.(14) bzw. (15)), die sich ohne Druckabbauanteil ergeben würde und der aktuelle Solldruck des Schlupfreglers $p_{slip}$ berechnet. Darauf beginnt eine Fallunterscheidung mit nachgeordnet unterschiedlichem Berechnungsgang, die letztendlich in die Zuordnung des aktuellen Zustandes 1, 2, 3 oder 4 mündet. Damit werden die Beeinflussungszyklen bzw. -strategien festgelegt. Zunächst wird entschieden, ob der Schlupfregler aktiv ist, d.h. ob die Druckaufbauanforderung durch den Schlupfregler begrenzt werden würde.

Ist dies nicht der Fall ($p_{auf,m} < p_{slip}$), dann muß als weitere Bedingung nur noch überprüft werden, ob die Druckaufbauanforderung kleiner als der Fahrervordruck $P_{main}$ ist. Wenn diese Bedingung erfüllt ist, dann liegt der Beeinflussungszyklus eins, d.h. Zustand 1, vor. Wenn nicht, dann muß als erster Schritt die Druckabbauanforderung mit maximalem Druckabbau berechnet werden (vgl. Gl.(7) und (11)). Wenn die darauffolgende Entscheidung, ob der Abbau vollständig erfolgen kann (Bedingung A : $p_{ab,m} > P_{lim}$) positiv erfolgt, dann liegt der Beeinflussungszyklus zwei, d.h. Zustand 2, vor und die endgültigen Druckanforderungen $p_{auf}$ und $p_{ab}$ sind bestimmbar. Wenn die Bedingung A nicht erfüllt ist, dann wird als nächstes entschieden, ob zumindest ein partieller Druckabbau möglich ist. Ist die zugeordnete Bedingung B ($p_{ab,ref} > p_{lim}$) erfüllt, dann ist partieller Druckabbau möglich, der Beeinflussungszyklus drei, d. h. der Zustand 3, liegt vor und die Druckanforderungen lassen sich berechnen (Druckaufbauanforderung vgl. Gl.(17)). Wenn die Bedingung B nicht erfüllt ist, dann ist kein Abbau möglich und der Beeinflussungszyklus vier, d.h. der Zustand 4, liegt vor.

Wenn der Schlupfregler aktiv ist, also $P_{slip}$ kleiner als $P_{auf,m}$ ist, dann wird zunächst entschieden, ob $P_{slip}$ größer als $P_{main}$ ist. Wenn dies nicht der Fall ist, dann ist die folgende Entscheidungs- und Berechnungsstruktur ähnlich dem direkt vorher beschriebenen Fall des nicht aktiven Schlupfreglers und einer Druckaufbauanforderung über $P_{main}$ hinaus. Lediglich die Bestimmungsgleichung für die Druckabbauanforderung mit maximalem Druckabbau ist nun Gl. (16) und die endgültige Druckanforderung für den Druckaufbau ist immer gleich $p_{slip}$. Wenn der Solldruck des Schlupfreglers $p_{slip}$ größer als $p_{main}$ ist, dann wird für die Bestimmungsgleichung des maximalen Druckabbaus wiederum Gl. (11) verwendet. Wenn die Bedingung A in diesem Zweig erfüllt ist und damit der Beeinflussungszyklus zwei, d.h. Zustand 2, vorliegt, dann wird die Druckaufbauanforderung gleich $p_{main}$ gesetzt, d.h. der Schlupfregler ist dann nicht mehr aktiv. Wenn der berechnete Druckabbau nicht vollständig abgesetzt werden kann und Bedingung B positiv ausfällt, dann wird zunächst die endgültige, um den Abbauanteil reduzierte Druckaufbauanforderung $p_{auf}$ berechnet und dann überprüft, ob der Schlupfregler immer noch aktiv ist. Wenn nicht, dann ist $p_{auf}$ die endgültige Druckaufbauanforderung im Beeinflussungszyklus drei bzw. Zustand 3, ansonsten ist diese gleich $p_{slip}$.

Ein wichtiges Element des Druckabbaus im zweiten oder dritten Beeinflussungszyklus bzw. im Zustand 2 und 3 besteht darin, daß die berechnete Druckabsenkung nicht innerhalb eines Zeitschritts des Reglers vorgenommen wird, sondern einem linearen Verlauf folgend über eine bestimmte Anzahl n von Zeitschritten (Größenordnung : 5) aufgeteilt wird. Hierdurch kann der Aufbau des daraus folgenden Giermoments moderater und besser dosiert vorgenommen werden. Der Zustand bleibt während dieser Zeit erhalten, d. h. eine Neuerkennung wird nicht durchgeführt. Der Druckabbauzustand wird beendet und eine Neuerkennung des Zustands zugelassen, sobald der genannte Zeitraum verstrichen ist oder sich die Eingriffsräder, d.h. sich die Steuertendenz des Fahrzeugs verändert. Im zweiten Beeinflussungszyklus, d.h. im Zustand 2, erfolgt die Berechnung der Druckabbauanforderung innerhalb der genanten n Zeitschritte für den Zeitschritt i nach der folgenden Beziehung:

$$P_{ab,i} = P_{ab,ref} - \Delta P_{ab,m}^{\frac{i}{n}} \text{ mit } \quad = I,...,n \tag{18}$$

Die analoge Beziehung für den dritten Beeinflussungszyklus, d.h. den Zustand 3 lautet:

$$P_{ab,i} = P_{ab,ref} - (\Delta P_{ab,m} - (P_{lim} - P_{ab,m}))^{\frac{i}{n}} \tag{19}$$

Der Referenzdruck $P_{ab,ref}$ wird auch bei aktivem Beeinflussungszyklus bzw. Zustand 2 oder 3 loopoaktuell neu bestimmt. Dies gilt nicht für die maximale Druckabbauanforderung $P_{ab,m}$ und den maximalen Druckabbau $\Delta P_{ab,m}$, d.h. die Werte aus der letzten Loop werden übernommen. Die Druckabbauanforderung $\boldsymbol{p_{ab,i}}$ nach Gleichung (18 und (19)wird auf den Druck $\boldsymbol{p}_{lim}$ nach unten begrenzt.

Die Druckaufbauanforderung $P_{auf,m}$ und den Solldruck des Schlupfreglers $P_{slip}$ werden auch während der aktiven Druckabbauphase in jedem Zeitschritt an die aktuellen Eingangsgrößen angepaßt. Dies geschieht, da zum einen der Schlupfregler im Hintergrund weiter aktiv sein muß, um ein Blockieren am Eingriffsrad zu verhindern. Weiterhin muß insbesondere im Beeinflussungszyklus bzw. Zustand 3 (kein vollständiger Abbau möglich und Aufbau über den Fahrervordruck) eine Steigerung der Druckaufbauanforderung bei weiterhin steigender Fahrzeuginstabilität möglich sein.

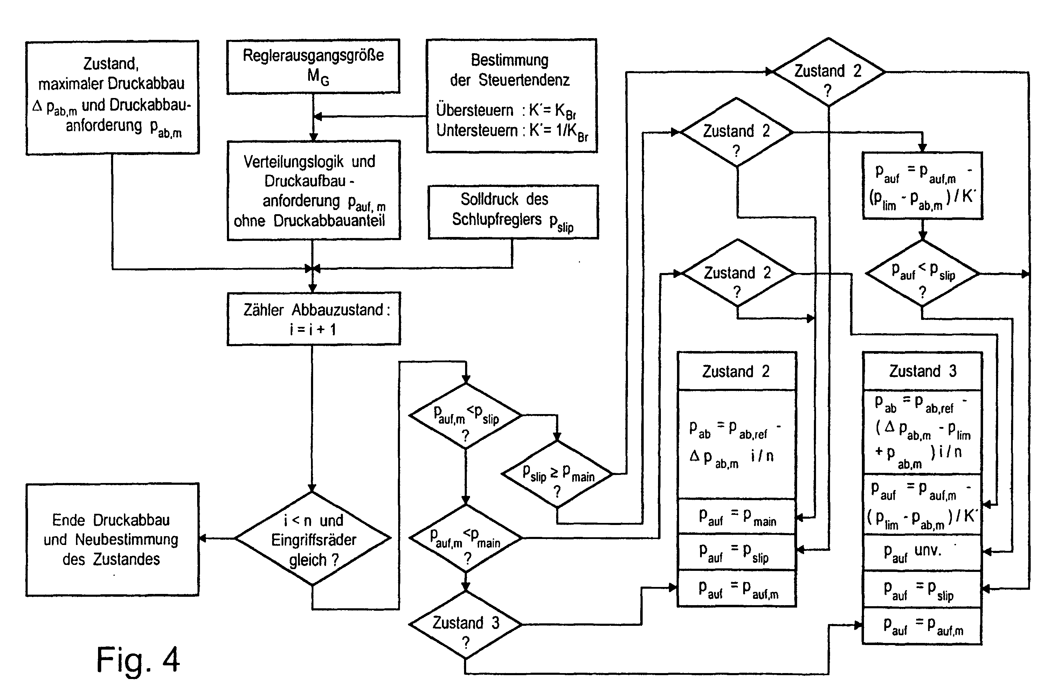

Der gesamte Ablauf für den zweiten und dritten Beeinflussungszyklus bzw. Zustand 2 und 3 wird nun erläutert. Wird gemäß Figur 3 ein Beeinflussungszyklus bzw. Zustand 2 oder 3 erkannt, dann wird die Druckabbauanforderung in diesem ersten Zeitschritt nach Gl. (18) bzw. (19) berechnet (in Figur 3 sind bereits die Endwerte der linearen Absenkung genannt). Für den folgenden zweiten bis zum n-ten Zeitschritt bzw. bis zum Abbruch des Druckabbauzustands ist die Ablauflogik in Figur 4 gezeigt. Als Eingangsgrößen stehen zunächst die loopaktuelle Reglerausgangsgröße und zugeordnete Steuertendenz zur Verfügung. Daraus werden in der Eingriffseinheit die Eingriffsräder bestimmt und desweiteren die Druckaufbauanforderung $P_{auf,m}$ berechnet. Ebenso wird der Solldruck des Schlupfreglers $P_{slip}$ dem aktuellen Schlupfverhalten angepaßt. Aus dem letzten Zeitschritt des aktiven Druckabbaus wird die Information über den Zustand, die maximale Druckabbauanforderung $P_{ab,m}$ und der maximale Druckabbau $\Delta P_{ab,m}$ übernommen. Nach Hochzählen eines Aktivierungszählers i für den Abbauzustand wird entschieden, ob der Druckabbau noch aktiv ist oder eine Neubestimmung des Zustands erfolgen muß (dies geschieht dann wieder nach Figur 3). Ist der Beeinflussungszyklus bzw. Zustand 2 oder 3 noch aktiv, dann wird die Druckabbauforderung entsprechend dem Zähler i nach Gl. (18) oder (19) berechnet. Der genauen Festlegung der Druckaufbauanforderung geht eine Bestimmung des Druckbereichs voraus, die hinsichtlich der logischen Struktur der in Figur 2 beschriebenen entspricht. Eine Ausnahme bildet lediglich der Fall, daß bei aktivem Druckaufbauzustand die Druckaufbauanforderung ggf. durch eine stark absinkende Instabilität des Fahrzeugs bei nicht aktivem Schlupfregler unter den Fahrervordruck absinkt. In diesem Fall wird sowohl im Beeinflussungszyklus bzw. Zustand 2, als auch im Beeinflussungszyklus bzw. Zustand 3 die Druckaufbauanforderung $P_{auf,m}$ übernommen, d.h. sie kann auch unter den Fahrervordruck $P_{main}$ absinken.

**Patentansprüche**

1. Fahrzeugstabilisierende ESP-Einrichtung zum Modifizieren von Bremsdrücken an Rädern bei einem Fahrzeug nach Eingangsdaten **gekennzeichnet durch**

eine Veränderung der Bremsdrücke an mindestens einem Rad nach einer vom Fahrerbremsdruck bestimmten Beeinflussung einer mehrere Beeinflussungszyklen oder -strategien zur Verfügung stellenden Eingriffseinheit.

2. Fahrzeugstabilisierende ESP-Einrichtung nach Anspruch 1, **dadurch gekennzeichnet, daß** der Eingriffseinheit Mittel zur Bestimmung eines Zusatzdrehmomentes ($M_G$) um die Hochachse des Fahrzeugs aus Ist- und Solldrehdaten, Mittel zur Bestimmung einer Bremsdruckaufteilung bei einem Druckauf-($P_{auf}$) und/oder -abbau ($P_{ab}$) an einem Vorder- und/oder Hinterrad, Mittel zur Bestimmung des Ist-Bremsdrucks ($P_{ab,ref}$, $P_{auf,ref}$) und des Fahrerbremsdruckes ($P_{main}$) und Mittel zur Bestimmung von mindestens einem oberen ($p_{slip}$) und einem unteren Grenzwert($P_{lim}$) zugeordnet sind.

3. Fahrzeugstabilisierende ESP-Einrichtung nach Anspruch 1 oder 2, **dadurch gekennzeichnet, daß** die Eingriffseinheit in Abhängigkeit von dem Beeinflussungszyklus Signale für eine ein vorgegebenes Drehmoment des Fahrzeugs bewirkende Druckanforderung nach einem Druckabbau und/oder Druckaufbau der Bremsdrücke generiert und die entsprechenden Steuerbefehle an die Aktuatoren abgibt.

4. Fahrzeugstabilisierende ESP-Einrichtung nach Anspruch 3, **dadurch gekennzeichnet, daß** die Druckanforderung für den Druckaufbau ermittelt wird, nach

$$P_{auf} = P_{auf,ref} + \Delta P_{auf}$$

mit
$P_{auf,ref}$ = Ist-Bremsdruck der Druckaufbauräder
$\Delta P_{auf}$ = Druckerhöhung im Druckaufbaufall
und für den Druckabbau nach

$$P_{ab} = P_{ab,ref} - \Delta P_{ab}$$

mit
$P_{ab,ref}$ = Ist-Bremsdruck des Druckabbaurades
$\Delta P_{ab}$ = Druckerniedrigung im Druckabbaufall

5. Fahrzeugstabilisierende ESP-Einrichtung nach Anspruch 3 oder 4, **dadurch gekennzeichnet, daß** die Druckanforderung für den Druckaufbau auf einen oberen Wert (***p**_{slip}*) begrenzt ist, dem ein Maximalschlupf von ca. 80 % Schlupf am Rad entspricht.

6. Fahrzeugstabilisierende ESP-Einrichtung nach einem der Ansprüche 3 bis 5, **dadurch gekennzeichnet, daß** die Druckanforderung für den Druckabbau auf Werte für den unteren Grenzdruck $P_{lim}$ von vorzugsweise 15 bar für die Vorderachse und vorzugsweise 5 bar für die Hinterachse festgelegt ist.

7. Fahrzeugstabilisierende ESP-Einrichtung nach einem der Ansprüche 1 bis 6, **dadurch gekennzeichnet, daß** die Eingriffseinheit bei einem ersten Beeinflussungszyklus Signale für eine das Drehmoment des Fahrzeugs bewirkende Druckveränderung an die Aktuatoren abgibt, die einen Druckaufbau bis maximal Fahrervordruck an mindestens einem Rad bewirken.

8. Fahrzeugstabilisierende ESP-Einrichtung nach einem der Ansprüche 1 bis 7, **dadurch gekennzeichnet, daß** die Eingriffseinheit bei einem zweiten Beeinflussungszyklus Signale für eine das Drehmoment des Fahrzeugs bewirkende Druckveränderung an die Aktuatoren abgibt, die einen -Druckaufbau bis maximal Fahrervordruck an mindestens einem Rad - und einen - Druckabbau bis minimal unterer Grenzbremsdruck an mindestens einem anderen Rad - bewirken.

9. Fahrzeugstabilisierende ESP-Einrichtung nach einem der Ansprüche 1 bis 8, **dadurch gekennzeichnet, daß** die Eingriffseinheit bei einem dritten Beeinflussungszyklus Signale für eine das Drehmoment des Fahrzeugs bewirkende Druckveränderung an die Aktuatoren abgibt, die einen - Druckaufbau bis über den Fahrervordruck hinaus an mindestens einem Rad -und einen-Druckabbau bis minimal unterer Grenzbremsdruck an mindestens einem anderen Rad bewirken.

10. Fahrzeugstabilisierende ESP-Einrichtung nach einem der Ansprüche 1 bis 9, **dadurch gekennzeichnet, daß** die Eingriffseinheit bei einem vierten Beeinflussungszyklus Signale für eine das Drehmoment des Fahrzeugs bewirkende Druckveränderung an die Aktuatoren abgibt, die einen
- Druckaufbau über den Fahrervordruck hinaus an mindestens einem anderen Rad -bewirken.

11. Fahrzeugstabilisierende ESP-Einrichtung nach einem der Ansprüche 1 bis 10, **dadurch gekennzeichnet, daß** die Auswahl der Räder an dem Fahrzeug für den Druckaufbau und/oder -abbau nach folgender Tabelle erfolgt

| Steuertendenz | Eingriffsrad | Druckmodula tion |
|---|---|---|
| übersteuernd | kurvenäußeres Vorderrad | Druckaufbau |
| | kurveninneres Hinterrad | Druckabbau |
| untersteuernd | kurveninneres Hinterrad | Druckaufbau |
| | kurvenäußeres Vorderrad | Druckabbau |

12. Fahrzeugstabilisierende ESP-Einrichtung nach einem der Ansprüche 1 bis 11, **dadurch gekennzeichnet, daß** der Druckabbau linear über eine bestimmte Anzahl von Zeitschritten aufgeteilt wird.

13. Fahrzeugstabilisierendes ESP-Verfahren zum Modifizieren von Bremsdrücken an Rädern bei einem Fahrzeug nach Eingangsdaten, **dadurch gekennzeichnet, daß** die Bremsdrücke an mindestens einem Rad nach vom Fahrerbremsdruck bestimmten Beeinflussungszyklen bzw. Beeinflussungsstrategien verändert werden.

14. Verfahren nach Anspruch 13, **dadurch gekennzeichnet, daß** der Bremsdruck für eine ein Drehmoment um die Hochachse des Fahrzeugs bewirkende Druckveränderung unter der Bedingung

$$P_{auf,m} < P_{slip}$$

und

$$P_{auf,m} < P_{main}$$

mit
$P_{auf,m}$ = maximale Druckaufbauanforderung
$P_{slip}$ = oberer Grenzbremsdruck
$P_{main}$ = Fahrerbremsdruck
in Abhängigkeit von einem über- oder untersteuernden Fahrverhalten des Fahrzeugs des kürvenäußeren Vorderrades oder des kurveninneren Hinterrades bis $P_{auf} = P_{auf,m}$ erhöht wird.

15. Verfahren nach Anspruch 13, **dadurch gekennzeichnet, daß** der Bremsdruck für eine ein Drehmoment um die Hochachse des Fahrzeugs bewirkende Druckveränderung unter den Bedingungen

$$p_{auf,m} < p_{slip} \qquad und \qquad p_{auf,m} \geq p_{main}$$

*oder*

$$p_{auf,m} \geq p_{slip} \qquad und \qquad p_{slip} \geq p_{main}$$

*oder*

$$p_{auf,m} \geq p_{slip} \qquad und \qquad p_{slip} < p_{main}$$

mit

$P_{auf,m}$ = maximale Druckaufbauanforderung

$P_{slip}$ = oberer Grenzbremsdruck

$P_{main}$ = Fahrerbremsdruck

und unter der Bedingung

$$P_{ab,ref} \leq P_{lim}$$

mit

$P_{ab,ref}$=Ist-Bremsdruck des Druckabbaurades

$P_{lim}$ =unterer Bremsdruck

in Abhängigkeit von einem über-oder untersteuernden Fahrverhalten des Fahrzeugs des kurvenäußeren Vorderrades oder des kurveninneren Hinterrades bis auf $P_{auf} = P_{auf,m}$, und für $P_{auf,m} \geq P_{slip}$ bis auf $P_{slip}$ erhöht wird.

**16.** Verfahren nach Anspruch 13, **dadurch gekennzeichnet, daß** der Bremsdruck für eine ein Drehmoment um die Hochachse des Fahrzeugs bewirkende Druckveränderung unter der Bedingung

$$p_{auf,m} < p_{slip} \qquad und \qquad p_{auf,m} \geq p_{main}$$

*oder*

$$p_{auf,m} \geq p_{slip} \qquad und \qquad p_{slip} \geq p_{main}$$

*oder*

$$p_{auf,m} \geq p_{slip} \qquad und \qquad p_{slip} < p_{main}$$

mit

$P_{auf,m}$ = maximale Druckaufbauanforderung

$P_{slip}$ = oberer Grenzbremsdruck

$P_{main}$ = Fahrerbremsdruck

in Abhängigkeit von einem übersteuernden Fahrverhalten des Fahrzeugs des kurvenäußeren Vorderrades erhöht wird, bis

$$P_{auf} = P_{main}$$

oder begrenzt wird auf

$$P_{auf} = P_{slip}$$

wenn $P_{auf,m} \geq P_{slip}$ und $P_{slip} < P_{main}$ erfüllt ist

und

des kurveninneren Hinterrades erniedrigt wird, bis

$$P_{ab} = P_{ab,m}$$

mit

$P_{ab}$ = Druckerniedrigung im Abbaufall

$P_{ab,m}$ = maximale Druckabbauanforderung

**17.** Verfahren nach 13, **dadurch gekennzeichnet, daß** der Bremsdruck für eine ein Drehmoment um die Hochachse des Fahrzeugs bewirkende Druckveränderung unter der Bedingung

$$p_{auf,m} < p_{slip} \qquad und \qquad p_{auf,m} \geq p_{main}$$

*oder*

$$p_{auf,m} \geq p_{slip} \qquad und \qquad p_{slip} \geq p_{main}$$

*oder*

$$p_{auf,m} \geq p_{slip} \qquad und \qquad p_{slip} < p_{main}$$

mit
$P_{auf,m}$ = maximale Druckaufbauanforderung
$P_{slip}$ = oberer Grenzbremsdruck
$P_{main}$ = Fahrerbremsdruck
in Abhängigkeit von einem untersteuernden Fahrverhalten des Fahrzeugs des kurveninneren Hinterrades erhöht wird, bis

$$P_{auf} = P_{main}$$

oder begrenzt wird auf

$$P_{auf} = P_{slip}$$

wenn $P_{auf,m} \geq P_{slip}$ und $P_{slip} < P_{main}$ erfüllt ist
und des kurvenäußeren Vorderrades erniedrigt wird, bis

$$P_{ab} = P_{ab,m}$$

mit
$P_{ab}$ = Druckerniedrigung im Abbaufall
$P_{ab,m}$ = maximale Druckabbauanforderung.

18. Verfahren nach Anspruch 15 oder 16, **dadurch gekennzeichnet, daß**
die Druckerniedrigung mit maximalem Druckabbau im Druckabbaufall nach

$$\Delta P_{ab,m} = K' \, (P_{auf,m} - P_{main})$$

mit
$\Delta P_{ab,m}$ = maximale Druckerniedrigung im Druckabbaufall
$K'$ = Gradient für die Bremsdruckaufteilung zwischen Vorder- und Hinterrad
$P_{auf,m}$ = maximale Druckaufbauanforderung
$P_{main}$ = Fahrervordruck
oder für die Bedingung
$P_{auf,m} \geq P_{slip}$ und $P_{slip} < P_{main}$
nach

$$\Delta p_{ab,m} = K'\left(p_{auf,m} - p_{slip}\right)$$

mit $P_{slip}$ = oberer Grenzbremsdruck
ermittelt wird und
bei

$$P_{ab,m} > P_{lim}$$

der Bremsdruck verändert wird.

**19.** Verfahren nach einem der Ansprüche 13 bis 16, **dadurch gekennzeichnet, daß** unter den Bedingungen

$$P_{ab,ref} > P_{lim} \text{ und } P_{ab,ref} \leq P_{main}$$

mit
$P_{ab,ref}$ = Ist-Bremsdruck des Druckabbaurades
$P_{lim}$ = unterer Grenzbremsdruck
$P_{main}$ = Fahrerbremsdruck
der Bremsdruck am kurvenäußeren Vorderrad oder am kurveninneren Hinterrad
nach

$$P_{auf} = P_{auf,m} - (P_{lim} - P_{ab,m}) / K'$$

mit
$P_{auf}$ = Druckaufbauanforderung
$P_{auf,m}$ = maximale Druckaufbauanforderung
$P_{lim}$ = unterer Grenzbremsdruck
$P_{ab,m}$ = maximale Druckabbauanforderung
$K'$ = Gradient für die Bremsdruckaufteilung zwischen Vorder- und Hinterrad über den Fahrerbremsdruck $P_{main}$ bis
maximal $P_{slip}$ erhöht wird und am diagonal zum Druckaufbaurad angeordneten Rad der Bremsdruck bis auf

$$P_{ab} = P_{lim}$$

mit $P_{ab}$ = Druckabbauanforderung
$P_{lim}$ = unterer Grenzbremsdruck
erniedrigt wird.

**20.** Verfahren nach einem der Ansprüche 13 bis 18, **dadurch gekennzeichnet, daß**
die Druckanforderung für den Druckaufbau auf einen oberen Wert ($p_{slip}$) begrenzt ist, dem ein Maximalschlupf von ca. 80 % Schlupf am Rad entspricht.

**21.** Verfahren nach einem der Ansprüche 13 bis 19, **dadurch gekennzeichnet, daß** die Druckanforderungen für den Druckabbau in Abhängigkeit von der vorderen oder hinteren Eingriffsachse des Fahrzeugs auf vorzugsweise konstante Werte für den unteren Grenzdruck $P_{lim}$ festgelegt werden.

**22.** Verfahren nach einem der Ansprüche 13 bis 20, **dadurch gekennzeichnet, daß**
der Druckabbau linear über eine bestimmte Anzahl von n Zeitschritten aufgeteilt wird.

**23.** Verfahren nach Anspruch 22, **dadurch gekennzeichnet, daß** während des zweiten Beeinflussungszyklus die Druckabbauanforderung für den Zeitschritt i nach der Beziehung

$$P_{ab,i} = P_{ab,ref} - \Delta P_{ab,m} \, i/n \text{ mit} = \quad 1,...,n$$

und während des dritten Beeinflussungszyklus nach der Beziehung

$$P_{ab,i} = P_{ab,ref} - (\Delta P_{ab,m} - (P_{lim} - P_{ab,m})) \, i/n$$

ermittelt wird.

## Claims

1. Vehicle stabilizing ESP device for modifying brake pressures on wheels of a vehicle according to input data, **characterized by** a variation of the brake pressures on at least one wheel according to a way of influencing an intervention unit that provides a number of influencing cycles or influencing strategies, the said influencing being defined by the brake pressure effected by the driver.

2. Vehicle stabilizing ESP device as claimed in claim 1, **characterized in that** associated with the intervention unit are means to determine an additional torque ($M_G$) about the vertical axis of the vehicle from actual and nominal rotation data, means to determine a brake pressure apportioning in the case of pressure increase ($P_{auf}$) and/or pressure reduction ($P_{ab}$) on a front wheel and/or rear wheel, means to determine the actual brake pressure ($P_{ab,\,ref}$, $P_{auf,\,ref}$) and the driver brake pressure ($P_{main}$), and means to determine at least one top limit value ($P_{slip}$) and one bottom limit value ($P_{lim}$).

3. Vehicle stabilizing ESP device as claimed in claim 1 or claim 2, **characterized in that** the intervention unit, in dependence on the influencing cycle, produces signals for a pressure requirement after a pressure reduction and/or pressure increase of the brake pressures, which pressure requirement effects a predetermined torque of the vehicle, and outputs corresponding control commands to the actuators.

4. Vehicle stabilizing ESP device as claimed in claim 3, **characterized in that** the pressure requirement is determined for the pressure increase according to

$$p_{auf} = p_{auf,ref} + \Delta p_{auf}$$

wherein

$P_{auf,ref} = $     actual brake pressure of the pressure buildup wheels
$\Delta P_{auf} = $     pressure increase in the pressure buildup case

and for the pressure reduction according to

$$P_{ab} = P_{ab,ref} - \Delta P_{ab}$$

wherein

$P_{ab,ref} = $     actual brake pressure of the pressure reduction wheel
$\Delta P_{auf} = $     pressure decrease in the pressure reduction case

5. Vehicle stabilizing ESP device as claimed in claim 3 or 4, **characterized in that** the pressure requirement for the pressure increase is limited to a top value ($P_{slip}$) to which corresponds a maximum slip of approximately 80 % slip on the wheel.

6. Vehicle stabilizing ESP device as claimed in any one of claims 3 to 5, **characterized in that** the pressure requirement for the pressure reduction is fixed to values for the bottom limit pressure $P_{lim}$ of preferably 15 bar for the front axle and preferably 5 bar for the rear axle.

**7.** Vehicle stabilizing ESP device as claimed in any one of claims 1 to 6,
**characterized in that** the intervention unit in a first influencing cycle outputs signals to the actuators for a pressure variation that effects the torque of the vehicle, the said signals effecting a pressure increase up to maximally the driver's initial pressure on at least one wheel.

**8.** Vehicle stabilizing ESP device as claimed in any one of claims 1 to 7,
**characterized in that** the intervention unit in a second influencing cycle outputs signals to the actuators for a pressure variation that effects the torque of the vehicle, the said signals effecting a pressure increase up to maximally the driver's initial pressure on at least one wheel and a pressure reduction until minimally the bottom limit brake pressure on at least one other wheel.

**9.** Vehicle stabilizing ESP device as claimed in any one of claims 1 to 8,
**characterized in that** the intervention unit in a third influencing cycle outputs signals to the actuators for a pressure variation that effects the torque of the vehicle, the said signals effecting a pressure increase in excess of the driver's initial pressure on at least one wheel and a pressure reduction until minimally the bottom limit brake pressure on at least one other wheel.

**10.** Vehicle stabilizing ESP device as claimed in any one of claims 1 to 9,
**characterized in that** the intervention unit in a fourth influencing cycle outputs signals to the actuators for a pressure variation that effects the torque of the vehicle, the said signals effecting a pressure increase in excess of the driver's initial pressure on at least one other wheel.

**11.** Vehicle stabilizing ESP device as claimed in any one of claims 1 to 10,
**characterized in that** the wheels on the vehicle for the pressure increase and/or pressure reduction are selected according to the following table

| control tendency | operated wheel | pressure modulation |
|---|---|---|
| oversteering | curve-outward front wheel | pressure increase |
| | curve-inward rear wheel | pressure reduction |
| understeering | curve-inward rear wheel | pressure increase |
| | curve-outward front wheel | pressure reduction |

**12.** Vehicle stabilizing ESP device as claimed in any one of claims 1 to 11,
**characterized in that** the pressure reduction is split up linearly over a defined number of time steps.

**13.** Vehicle stabilizing ESP method for modifying brake pressures on wheels of a vehicle according to input data,
**characterized in that** the brake pressures on at least one wheel are varied according to influencing cycles or influencing strategies determined by the driver brake pressure.

**14.** Method as claimed in claim 13,
**characterized in that** the brake pressure for a pressure variation that effects a torque about the vertical axis of the vehicle, under the condition

$$P_{auf,m} < P_{slip}$$

and

$$P_{auf,m} < P_{main}$$

wherein

$P_{auf,m}$ = maximum pressure increase requirement
$P_{slip}$ = top limit brake pressure

$P_{main}$ =     driver brake pressure,

is increased until $P_{auf} = P_{auf,m}$ in dependence on an oversteering or understeering driving behavior of the vehicle of the curve-outward front wheel or the curve-inward rear wheel.

15. Method as claimed in claim 13,
**characterized in that** the brake pressure for a pressure variation that effects a torque about the vertical axis of the vehicle, under the conditions

$$P_{auf,m} < P_{slip} \text{ and } P_{auf,m} \geq P_{main}$$

or

$$P_{auf,m} \geq P_{slip} \text{ and } P_{slip} \geq P_{main}$$

or

$$P_{auf,m} \geq P_{slip} \text{ and } P_{slip} < P_{main},$$

wherein

$P_{auf,m}$ =     maximum pressure increase requirement
$P_{slip}$ =     top limit brake pressure
$P_{main}$ =     driver brake pressure,

and under the condition

$$P_{ab,ref} \leq P_{lim}$$

wherein

$P_{ab,ref}$ =     actual brake pressure of pressure reduction wheel
$P_{lim}$ =     bottom brake pressure,

is increased until $P_{auf} = P_{auf,m}$, and for $P_{auf,m} \geq P_{slip}$ until $P_{slip}$ in dependence on an oversteering or understeering driving behavior of the vehicle of the curve-outward front wheel or the curve-inward rear wheel.

16. Method as claimed in claim 13,
**characterized in that** the brake pressure for a pressure variation that effects a torque about the vertical axis of the vehicle, under the condition

$$P_{auf,m} < P_{slip} \text{ and } P_{auf,m} \geq P_{main}$$

or

$$P_{auf,m} \geq P_{slip} \text{ and } P_{slip} \geq P_{main}$$

or

$$P_{auf,m} \geq P_{slip} \text{ and } P_{slip} < P_{main},$$

wherein

$P_{auf,m}$ = maximum pressure increase requirement
$P_{slip}$ = top limit brake pressure
$P_{main}$ = driver brake pressure,

is increased in dependence on an oversteering driving behavior of the vehicle on the curve-outward front wheel until

$$P_{auf} = P_{main}$$

or is limited to

$$P_{auf} = P_{slip}$$

when $P_{auf,m} \geq P_{slip}$ and $P_{slip} < P_{main}$ is satisfied
and is lowered on the curve-inward rear wheel until

$$P_{ab} = P_{ab,m}$$

wherein

$P_{ab}$ = pressure decrease in the reduction case
$P_{ab,m}$ = maximum pressure reduction requirement.

17. Method as claimed in claim 13,
**characterized in that** the brake pressure for a pressure variation that effects a torque about the vertical axis of the vehicle, under the condition

$$P_{auf,m} < P_{slip} \text{ and } P_{auf,m} \geq P_{main}$$

or

$$P_{auf,m} \geq P_{slip} \text{ and } P_{slip} \geq P_{main}$$

or

$$P_{auf,m} \geq P_{slip} \text{ and } P_{slip} < P_{main},$$

wherein

$P_{auf,m}$ = maximum pressure increase requirement
$P_{slip}$ = top limit brake pressure
$P_{main}$ = driver brake pressure,

is increased in dependence on an understeering driving behavior of the vehicle on the curve-inward rear wheel until

$$P_{auf} = P_{main}$$

or is limited to

$$P_{auf} = P_{slip}$$

when $P_{auf,m} \geq P_{slip}$ and $P_{slip} < P_{main}$ is satisfied
and is lowered on the curve-outward front wheel until

$$P_{ab} = P_{ab,m}$$

wherein

$P_{ab}$ =     pressure decrease in the reduction case
$P_{ab,m}$ =     the maximum pressure reduction requirement.

**18.** Method as claimed in claim 15 or 16,
**characterized in that** the pressure decrease with a maximum pressure reduction in the pressure reduction case is determined according to

$$\Delta P_{ab,m} = K' (P_{auf,m} - P_{main})$$

wherein

$\Delta P_{ab,m}$ =     maximum pressure decrease in the pressure reduction case
$K'$ =     gradient for the brake pressure apportioning between front and rear wheel
$P_{auf,m}$ =     maximum pressure increase requirement
$P_{main}$ =     driver's initial pressure

or is determined for the condition

$$P_{auf,m} \geq P_{slip} \text{ and } P_{slip} < P_{main}$$

according to

$$\Delta P_{ab,m} = K'(P_{auf,m} - P_{slip})$$

wherein $P_{slip}$ = top limit brake pressure
and
the brake pressure is varied with $P_{ab,m} > P_{lim}$.

**19.** Method as claimed in any one of claims 13 to 16,
**characterized in that** under the conditions

$$P_{ab,ref} > P_{lim} \text{ and } P_{ab,ref} \leq P_{main}$$

wherein

$P_{ab,ref}$ =     actual brake pressure of the pressure reduction wheel
$P_{lim}$ =     bottom limit brake pressure
$P_{main}$ =     driver brake pressure,

the brake pressure on the curve-outward front wheel or on the curve-inward rear wheel is increased according to

$$P_{auf} = P_{auf,m} - (P_{lim} - P_{ab,m}) / K'$$

wherein

$P_{auf}$ = pressure increase requirement
$P_{auf,m}$ = maximum pressure increase requirement
$P_{lim}$ = bottom limit brake pressure
$P_{ab,m}$ = maximum pressure reduction requirement
$K'$ = gradient for the brake pressure apportioning between front and rear wheel

in excess of the driver brake pressure $p_{main}$ until maximally $P_{slip}$, and the brake pressure on the wheel arranged diagonally to the pressure increase wheel is lowered to

$$P_{ab} = P_{lim}$$

wherein

$P_{ab}$ = pressure reduction requirement
$P_{lim}$ = bottom limit brake pressure.

20. Method as claimed in any one of claims 13 to 18, **characterized in that** the pressure requirement for the pressure increase is limited to a top value ($P_{slip}$) to which corresponds a maximum slip of approximately 80 % slip on the wheel.

21. Method as claimed in any one of claims 13 to 19, **characterized in that** the pressure requirements for the pressure reduction in dependence on the front or rear axle of the vehicle where the intervention is effected are fixed to preferably constant values for the bottom limit pressure $P_{lim}$.

22. Method as claimed in any one of claims 13 to 20, **characterized in that** the pressure reduction is apportioned linearly over a defined number of n time steps.

23. Method as claimed in claim 22, **characterized in that** the pressure reduction requirement for the time step i is determined according to the relation

$$P_{ab,i} = P_{ab,ref} - \Delta P_{ab,m} \ i/n \text{ wherein } = 1,...,n$$

during the second influencing cycle
and according to the relation

$$P_{ab,i} = P_{ab,ref} - \Delta P_{ab,m} - (P_{lim} - P_{ab,m})) \ i/n$$

during the third influencing cycle.

**Revendications**

1. Dispositif ESP de stabilisation de véhicule pour modifier les pressions de freinage sur les roues d'un véhicule selon des données d'entrée, **caractérisé par** une variation des pressions de freinage sur au moins une roue selon une intervention, déterminée par la pression de freinage du conducteur, d'une unité d'intervention fournissant plusieurs cycles ou stratégies d'intervention.

2. Dispositif ESP de stabilisation de véhicule selon la revendication 1, **caractérisé en ce qu'**à l'unité d'intervention sont affectés des moyens pour déterminer un couple de rotation supplémentaire ($M_G$) autour de l'axe vertical du véhicule à partir de données de rotation réelles et de consigne, des moyens pour déterminer une répartition de la pression de freinage en cas de montée de la pression ($P_{auf}$) et/ou de réduction de la pression ($P_{ab}$) sur une roue avant et/ou une roue arrière, des moyens pour déterminer la pression réelle de freinage ($P_{ab,ref}$, $P_{auf,ref}$) et de la pression de freinage du conducteur ($P_{main}$) et des moyens pour déterminer au moins une valeur limite supérieure ($P_{slip}$) et une valeur limite inférieure ($P_{lim}$).

3. Dispositif ESP de stabilisation de véhicule selon la revendication 1 ou 2, **caractérisé en ce que** l'unité d'intervention génère, en fonction du cycle d'intervention, des signaux pour une demande de pression, provoquant un couple de rotation donné du véhicule, après une réduction de pression et/ou une montée de pression des pressions de freinage, et délivre les instructions de commande correspondantes aux actionneurs.

4. Dispositif ESP de stabilisation de véhicule selon la revendication 3, **caractérisé en ce que** la demande de pression pour la montée en pression est déterminée selon

$$P_{auf} = P_{auf,ref} + \Delta P_{auf}$$

dans laquelle
$P_{auf,ref}$ = pression réelle de freinage sur les roues de montée en pression
$\Delta P_{auf}$ = augmentation de la pression en cas de montée en pression
et pour la réduction de pression selon

$$P_{ab} = P_{ab,ref} = \Delta P_{ab}$$

dans laquelle
$P_{ab,ref}$ = pression réelle de freinage sur la roue de réduction de pression
$\Delta P_{ab}$ = abaissement de la pression en cas de réduction de pression.

5. Dispositif ESP de stabilisation de véhicule selon la revendication 3 ou 4, **caractérisé en ce que** la demande de pression pour la réduction de pression est limitée à une valeur supérieure ($P_{slip}$) à laquelle correspond un patinage maximal d'environ 80 % de patinage sur la roue.

6. Dispositif ESP de stabilisation de véhicule selon l'une des revendications 3 à 5, **caractérisé en ce que** la demande de pression pour la réduction de pression est fixée sur des valeurs de la pression limite inférieure ($P_{lim}$) de préférence de 15 bars pour l'essieu avant et de préférence de 5 bars pour l'essieu arrière.

7. Dispositif ESP de stabilisation de véhicule selon l'une des revendications 1 à 6, **caractérisé en ce qu'**au cours d'un premier cycle d'intervention, l'unité d'intervention délivre aux actionneurs des signaux pour une variation de la pression provoquant le couple de rotation du véhicule, qui provoquent, sur au moins une roue, une montée de la pression au maximum jusqu'à la pression imposée par le conducteur.

8. Dispositif ESP de stabilisation de véhicule selon l'une des revendications 1 à 7, **caractérisé en ce qu'**au cours d'un deuxième cycle d'intervention, l'unité d'intervention délivre aux actionneurs des signaux pour une variation de la pression provoquant le couple de rotation du véhicule, qui provoquent, sur au moins une roue, une montée de la pression maximum jusqu'à la pression imposée par le conducteur et, sur au moins une autre roue, une réduction de la pression au minimum jusqu'à la limite inférieure de la pression de freinage.

9. Dispositif ESP de stabilisation de véhicule selon l'une des revendications 1 à 8, **caractérisé en ce qu'**au cours d'un troisième cycle d'intervention, l'unité d'intervention délivre aux actionneurs des signaux pour une variation de la pression provoquant le couple de rotation du véhicule, qui provoquent sur au moins une roue une réduction de la pression jusqu'au delà de la pression imposée par le conducteur, et sur au moins une autre roue, une réduction de la pression au minimum jusqu'à la limite inférieure de la pression de freinage.

10. Dispositif ESP de stabilisation de véhicule selon l'une des revendications 1 à 9, **caractérisé en ce qu'**au cours d'un quatrième cycle d'intervention, l'unité d'intervention délivre aux actionneurs des signaux pour une variation de la pression provoquant le couple de rotation du véhicule, qui provoquent, sur au moins une autre roue, une réduction de la pression jusqu'au delà de la pression imposée par le conducteur.

**11.** Dispositif ESP de stabilisation de véhicule selon l'une des revendications 1 à 10, **caractérisé en ce que** le choix des roues du véhicule pour la montée en pression et/ou la réduction de pression s'effectue selon le tableau suivant :

| Tendance de la commande | Roue d'intervention | Modulation de la pression |
|---|---|---|
| Survirage | Roue avant côté extérieur de la courbe | Montée de la pression |
| | Roue arrière côté intérieur de la courbe | Réduction de la pression |
| Sous-virage | Roue arrière côté intérieur de la courbe | Montée de la pression |
| | Roue avant côté extérieur de la courbe | Réduction de la pression |

**12.** Dispositif ESP de stabilisation de véhicule selon l'une des revendications 1 à 11, **caractérisé en ce que** la réduction de la pression est répartie linéairement sur un nombre déterminé d'étapes temporelles.

**13.** Procédé ESP de stabilisation de véhicule pour modifier les pressions de freinage sur les roues d'un véhicule suivant des données d'entrée, **caractérisé en ce qu'**on modifie les pressions de freinage sur au moins une roue selon des cycles ou des stratégies d'intervention déterminés par la pression de freinage du conducteur.

**14.** Procédé selon la revendication 13, **caractérisé en ce qu'**on augmente la pression de freinage jusqu'à $P_{auf} = P_{auf,m}$ pour une variation de la pression provoquant un couple de rotation autour de l'axe vertical du véhicule, sous la condition

$$P_{auf,\, m} < P_{slip}$$

et

$$P_{auf,m} < P_{main}$$

où
$P_{auf,m}$ = demande maximale de montée de la pression
$P_{slip}$ = limite supérieure de la pression de freinage
$P_{main}$ = pression de freinage du conducteur
en fonction d'un comportement de survirage ou sous-virage du véhicule de la roue avant située côté extérieur de la courbe ou de la roue arrière située côté intérieur de la courbe.

**15.** Procédé selon la revendication 13, **caractérisé en ce qu'**on augmente la pression de freinage, jusqu'à $P_{auf} = P_{auf,m}$ et $P_{auf,m} \geq P_{slip}$ jusqu'à $P_{slip}$, pour une variation de la pression provoquant un couple de rotation autour de l'axe vertical du véhicule, sous les conditions

$$P_{auf,\, m} < P_{slip} \text{ et } P_{auf,m} \geq P_{main}$$

ou

$$P_{auf,m} \geq P_{slip} \text{ et } P_{slip} \geq P_{main}$$

ou

$$P_{auf,m} \geq P_{slip} \text{ et } P_{slip} < P_{main}$$

où
$P_{auf,m}$ = demande maximale de montée de la pression
$P_{slip}$ = limite supérieure de la pression de freinage
$P_{main}$ = pression de freinage du conducteur

et sous la condition

$$P_{ab,ref} \leq P_{lim}$$

où
$P_{ab,ref}$ = pression réelle de freinage de la roue de réduction de pression
$P_{lim}$ = pression de freinage inférieure
en fonction d'un comportement de survirage ou sous-virage du véhicule de la roue avant située côté extérieur de la courbe ou de la roue arrière située côté intérieur de la courbe.

**16.** Procédé selon la revendication 13, **caractérisé en ce qu'**on augmente la pression de freinage, pour une variation de la pression provoquant un couple de rotation autour de l'axe vertical du véhicule, sous la condition

$$P_{auf, m} < P_{slip} \text{ et } P_{auf,m} \geq P_{main}$$

ou

$$P_{auf,m} \geq P_{slip} \text{ et } P_{slip} \geq P_{main}$$

ou

$$P_{auf,m} \geq P_{slip} \text{ et } P_{slip} < P_{main}$$

où
$P_{auf,m}$ = demande maximale de montée de la pression
$P_{slip}$ = limite supérieure de la pression de freinage
$P_{main}$ = pression de freinage du conducteur
en fonction d'un comportement de survirage du véhicule de la roue avant située côté extérieur de la courbe, jusqu'à

$$P_{auf} = P_{main}$$

ou on la limite à

$$P_{auf} = P_{slip}$$

si l'on a $P_{auf,m} \geq P_{slip}$ et $P_{slip} < P_{main}$
et
on abaisse la pression de freinage sur la roue arrière située côté intérieur de la courbe, jusqu'à

$$P_{ab} = P_{ab,m}$$

où
$P_{ab}$ = abaissement de la pression en cas de réduction,
$P_{ab,m}$ = demande maximale de réduction de la pression.

**17.** Procédé selon la revendication 13, **caractérisé en ce qu'**on augmente la pression de freinage, pour une variation de la pression provoquant un couple de rotation autour de l'axe vertical du véhicule, sous la condition

$$P_{auf, m} < P_{slip} \text{ et } P_{auf,m} \geq P_{main}$$

ou

$$P_{auf,m} \geq P_{slip} \text{ et } P_{slip} \geq P_{main}$$

ou

$$P_{auf,m} \geq P_{slip} \text{ et } P_{slip} < P_{main}$$

où
$P_{auf,m}$ = demande maximale de montée de la pression
$P_{slip}$ = limite supérieure de la pression de freinage
$P_{main}$ = pression de freinage du conducteur
en fonction d'un comportement de sous-virage du véhicule de la roue arrière située côté intérieur de la courbe, jusqu'à

$$P_{auf} = P_{main}$$

ou on la limite à

$$P_{auf} = P_{slip}$$

si l'on a $P_{auf,m} \geq P_{slip}$ et $P_{slip} < P_{main}$
et
on l'abaisse en fonction de la roue avant située côté extérieur de la courbe, jusqu'à

$$P_{ab} = P_{ab,m}$$

où
$P_{ab}$ = abaissement de la pression en cas de réduction,
$P_{ab,m}$ = demande maximale de réduction de la pression.

18. Procédé selon la revendication 15 ou 16, **caractérisé en ce qu'**on détermine l'abaissement de la pression avec réduction maximale de la pression en cas de réduction de pression selon

$$\Delta P_{ab,m} = K' (P_{auf,m} - P_{main})$$

où
$\Delta P_{ab,m}$ = abaissement maximale de la pression en cas de réduction de pression
$K'$ = gradient pour la distribution de la pression de freinage entre la roue avant et la roue arrière,
$P_{auf,m}$ = demande maximale de montée en pression
$P_{main}$ = pression imposée par le conducteur
ou pour la condition

$$P_{auf,m} \geq P_{slip} \text{ et } P_{slip} < P_{main}$$

selon

$$\Delta P_{ab,m} = K' (P_{auf,m} - P_{slip})$$

où $P_{slip}$ = limite supérieure de la pression de freinage

et on modifie la pression de freinage pour

$$P_{ab,m} > P_{lim}$$

**19.** Procédé selon l'une des revendications 13 à 16, **caractérisé en ce que** sous les conditions

$$P_{ab,ref} > P_{lim} \text{ et } P_{ab,ref} \leq P_{main}$$

où

$P_{ab,ref}$ = pression réelle de freinage de la roue de réduction de pression

$P_{lim}$ = limite inférieure de la pression de freinage

$P_{main}$ = pression de freinage du conducteur

on augmente la pression de freinage sur la roue avant située côté extérieur de la courbe ou sur la roue arrière située côté intérieur de la courbe

selon

$$P_{auf} = P_{auf,m} - (P_{lim} - P_{ab,m}) / K'$$

où

$P_{auf}$ = demande de montée en pression

$P_{auf,m}$ = demande maximale de montée en pression

$P_{lim}$ = limite inférieure de la pression de freinage

$P_{ab,m}$ = demande maximale de réduction de pression

$K'$ = gradient pour la distribution de la pression de freinage entre la roue avant et la roue arrière, au-delà de la pression de freinage du conducteur $P_{main}$ jusqu'à au maximum $P_{slip}$, et, sur la roue disposée en diagonale par rapport à la roue de réduction de pression, on abaisse la pression de freinage jusqu'à

$$P_{ab} = P_{lim}$$

où $P_{ab}$ = demande de réduction de pression

$P_{lim}$ = limite inférieure de la pression de freinage.

**20.** Procédé selon l'une des revendications 13 à 18, **caractérisé en ce que** la demande de pression pour la montée en pression est limitée à une valeur supérieure ($P_{slip}$) à laquelle correspond un patinage maximal d'environ 80 % de patinage sur la roue.

**21.** Procédé selon l'une des revendications 13 à 19, **caractérisé en ce que** les demandes de pression pour la réduction de pression en fonction de l'essieu d'intervention avant ou arrière du véhicule sont fixées à des valeurs de préférence constantes pour la limite inférieure de la pression $P_{lim}$.

**22.** Procédé selon l'une des revendications 13 à 20, **caractérisé en ce que** la réduction de pression est répartie linéairement sur un nombre déterminé de n étapes temporelles.

**23.** Procédé selon la revendication 22, **caractérisé en ce que** pendant le deuxième cycle d'intervention, on détermine la demande de réduction de pression pour l'étape temporelle i selon la relation

$$P_{ab,i} = P_{ab,ref} - \Delta P_{ab,m}\ i/n \text{ avec } = 1,....,n$$

et pendant le troisième cycle d'intervention on la détermine suivant la relation

$$P_{ab,i} = P_{ab,ref} - (\Delta P_{ab,m} - (P_{lim} - P_{ab,m}))i/n.$$

```
┌─────────────────────────────┐        ┌─────────────────────────────┐
│                             │        │                             │
│  Reglerausgangsgröße M_G    │        │     Bestimmung der          │
│                             │        │     Steuertendenz           │
└─────────────────────────────┘        └─────────────────────────────┘
               │                                      │
               │         ◄────────────────────────────┘
               ▼
┌─────────────────────────────┐        ┌─────────────────────────────┐
│      Eingriffseinheit       │        │     Solldruck des           │
│   und Berechnung der        │        │  Schlupfreglers p_slip      │
│ Druckaufbauanforderung p_auf│        │                             │
└─────────────────────────────┘        └─────────────────────────────┘
               │                                      │
               │         ◄────────────────────────────┘
               ▼
         ╱───────────╲                  ┌─────────────────────────────┐
        ╱             ╲                 │    Druckanforderung         │
       ╱ p_auf < p_slip ? ╲──────────►  │    ist gleich p_slip        │
        ╲             ╱                 │                             │
         ╲───────────╱                  └─────────────────────────────┘
               │
               ▼
┌─────────────────────────────┐
│    Druckanforderung         │
│    ist gleich p_auf         │
└─────────────────────────────┘
```

Fig. 1

# Fig. 2

Fahrervorgabe
$\delta$, v

Reibwert
$\mu$

Referenzmodell der Querdynamik

$\dot{\psi}_{soll}$

$\dot{\psi}_{gem}$

$-\Delta\dot{\psi}$

PD - Regler

Druckanforderung
Regler

Momentenverteilung

Raddrücke
$p_i$

Bremse
Reifen
Fahrbahn

Seitenkraft $\Delta F_{S,i}$
Längskraft $\Delta F_{B,i}$

Fahrzeugstruktur

$\dot{\psi}_{gem}$

$a_{q.\,gem}$

$\dot{\beta}_{soll} = 0$

$\Delta\dot{\beta}$

P - Regler

$\dot{\beta}_{ist}$

v $\beta$

$\psi$

Gierwinkel $\psi$
Schwimmwinkel $\beta$

$\dot{\beta}_{ist} = a_{q.\,gem}/v - \dot{\psi}_{gem}$

Kraftgleichgewicht in
Fahrzeugquerrichtung

$(\dot{\psi} + \dot{\beta})\,v = a_q$

EP 1 077 850 B1

```
┌─────────────────────┐   ┌──────────────────────────┐        ┌──────────────────────────┐   ┌──────────────────────┐   ┌──────────────────────┐
│ Reglerausgangsgröße │   │       Bestimmung         │        │   Druckanforderung mit   │   │    Entscheidung      │   │    Entscheidung      │
│         MG          │   │    der Steuertendenz     │        │  maximalem Druckabbau    │   │ vollständiger Abbau  │   │  partieller Abbau    │
└─────────────────────┘   │                          │        │                          │   │                      │   │                      │
                          │ Übersteuern  : K′=KBr    │        │ pab, m = pab, ref − Δpab,m │   │ Bed. A : pab, m > plim │   │ Bed. B : pab, ref > plim │
                          │ Untersteuern : K′=1/KBr  │        │                          │   │                      │   │                      │
                          └──────────────────────────┘        └──────────────────────────┘   └──────────────────────┘   └──────────────────────┘
```

Equations in boxes:

Druckanforderung mit maximalem Druckabbau: $p_{ab,\,m} = p_{ab,\,ref} - \Delta p_{ab,m}$

Entscheidung vollständiger Abbau — Bed. A: $p_{ab,\,m} > p_{lim}$

Entscheidung partieller Abbau — Bed. B: $p_{ab,\,ref} > p_{lim}$

Bestimmung der Steuertendenz:
Übersteuern: $K' = K_{Br}$
Untersteuern: $K' = 1/K_{Br}$

Reglerausgangsgröße $M_G$

Verteilungslogik und Druckaufbau‑anforderung $p_{auf,\,m}$ ohne Druckabbauanteil

Solldruck des Schlupfreglers $p_{slip}$

Decision diamonds:
- $p_{auf,\,m} < p_{slip}$ ?
- $p_{slip} \geq p_{main}$ ?
- $p_{auf,\,m} < p_{main}$ ?
- A ?
- B ?
- $p_{auf} < p_{slip}$ ?

Process boxes:
- $\Delta p_{ab,\,m} = K'(p_{auf,\,m} - p_{slip})$
- $\Delta p_{ab,\,m} = K'(p_{auf,\,m} - p_{main})$
- $\Delta p_{ab,\,m} = K'(p_{auf,\,m} - p_{main})$
- $p_{auf} = p_{auf,\,m} - (p_{lim} - p_{ab,\,m})/K'$

**Zustand 1**

$p_{auf}' = p_{auf,\,m}$

kein Abbau

**Zustand 2**

$p_{auf} = p_{main}$
$p_{ab} = p_{ab,\,m}$

$p_{auf} = p_{slip}$
$p_{ab} = p_{ab,\,m}$

**Zustand 3**

$p_{auf} = p_{auf,\,m} - (p_{lim} - p_{ab,\,m})/K'$
$p_{ab} = p_{lim}$

$p_{auf}$ unv.
$p_{ab} = p_{lim}$

$p_{auf} = p_{slip}$
$p_{ab} = p_{lim}$

**Zustand 4**

$p_{auf} = p_{auf,\,m}$
kein Abbau

$p_{auf} = p_{slip}$
kein Abbau

Fig. 3

Fig. 4

Zustand, maximaler Druckabbau $\Delta p_{ab,m}$ und Druckabbau-anforderung $p_{ab,m}$

Reglerausgangsgröße $M_G$

Bestimmung der Steuertendenz
Übersteuern : $K' = K_{Br}$
Untersteuern : $K' = 1/K_{Br}$

Zustand 2 ?

Verteilungslogik und Druckaufbau-anforderung $p_{auf,m}$ ohne Druckabbauanteil

Solldruck des Schlupfreglers $p_{slip}$

Zustand 2 ?

$p_{auf} = p_{auf,m} - (p_{lim} - p_{ab,m})/K'$

Zähler Abbauzustand : $i = i + 1$

Zustand 2 ?

$p_{auf} < p_{slip}$ ?

$p_{auf,m} < p_{slip}$ ?

$p_{slip} \geq p_{main}$ ?

Ende Druckabbau und Neubestimmung des Zustandes

$i < n$ und Eingriffsräder gleich ?

$p_{auf,m} < p_{main}$ ?

Zustand 3 ?

Zustand 2
$p_{ab} = p_{ab,ref} - \Delta p_{ab,m} \cdot i/n$
$p_{auf} = p_{main}$
$p_{auf} = p_{slip}$
$p_{auf} = p_{auf,m}$

Zustand 3
$p_{ab} = p_{ab,ref} - (\Delta p_{ab,m} - p_{lim} + p_{ab,m}) i/n$
$p_{auf} = p_{auf,m} - (p_{lim} - p_{ab,m})/K'$
$p_{auf}$ unv.
$p_{auf} = p_{slip}$
$p_{auf} = p_{auf,m}$